# EUROPÄISCHE PATENTANMELDUNG

(11) **EP 1 582 095 A1**
(43) Veröffentlichungstag der Anmeldung: **05.10.2005**
(21) Anmeldenummer: 05005086.3
(22) Anmeldetag: 09.03.2005
(51) Int. Cl.: A01G 9/10

(54) **Biologisch abbaubares Material**

(30) Priorität: 01.04.2004 DE 102004015941
(71) Anmelder: ARGUS Additive Plastics GmbH, 33142 Büren (DE)
(72) Erfinder: Huck, Stefan, Dr., 49090 Osnabrück (DE)
(74) Vertreter: Fritz, Edmund Lothar

(57) **Zusammenfassung**

Die vorliegende Erfindung betrifft biologisch abbaubares Material umfassend mindestens ein biologisch abbaubares Polymeres als Trägerwerkstoff, wobei in dem Trägerwerkstoff mindestens ein wasserlösliches Salz (14) gelöst oder dispergiert ist, welches als Pflanzennährstoff dient und/oder das Pflanzenwachstum fördert, wobei das biologisch abbaubare Material wenigstens ein wasserlösliches Salz in einem biologisch abbaubaren Trägerpolymeren in einer solchen Menge enthält, dass das Material im Freien an der Umgebungsluft unter Witterungseinfluss innerhalb einer vorgegebenen Standzeit abgebaut wird.

## Beschreibung

Die vorliegende Erfindung betrifft ein biologisch abbaubares Material umfassend mindestens ein biologisch abbaubares Polymeres als Trägerwerkstoff, wobei in dem Trägerwerkstoff mindestens ein wasserlösliches Salz gelöst oder dispergiert ist, welches als Pflanzennährstoff dient und/oder das Pflanzenwachstum fördert.

Aus dem Stand der Technik ist es bekannt, aus biologisch abbaubaren Materialien der eingangs genannten Art beispielsweise Folien herzustellen, die insbesondere im Agrarbereich eingesetzt werden, beispielsweise als Mulchfolien zum Abdecken von Bodenpartien. In jüngerer Zeit sind einige interessante biologisch abbaubare Kunststoffe bekannt geworden, die sich innerhalb von Wochen oder Monaten vollständig und rückstandsfrei zersetzen. Hier ist beispielsweise das von der BASF entwickelte Material Ecoflex® zu nennen. Dabei handelt es sich um einen aliphatisch-aromatischen Copolyester, welcher Baueinheiten aus der Terephthalsäure, Adipinsäure und Butandiol enthält. Die Abbaubarkeit von Ecoflex und anderen vergleichbaren biologisch abbaubaren Kunststoffen ist jedoch nur dann gegeben, wenn man beispielsweise eine Folie unterpflügt. Dies bedeutet, die Folie muss im Erdreich liegen. Eine auf dem Boden an der Oberfläche liegende Mulchfolie verrottet hingegen nicht.

Die bislang üblichen, im landwirtschaftlichen Bereich verwendeten Folien haben weitere Nachteile. Wachstumsfolien müssen beispielsweise während bestimmter Pflanzen-Wachstumsphasen oder für die Ernte geöffnet werden. Anschließend müssen diese Wachstumsfolien, wenn sie nicht biologisch abbaubar sind, von der landwirtschaftlichen Fläche entfernt werden. Wenn sie biologisch abbaubar sind, müssen sie untergepflügt werden. Folien, die im Sommer ausgelegt werden, müssen gestanzt (löchrig) sein, damit kein Wärmestau unter den Folien entsteht.

Das japanische Patent Abstract 11113414 A beschreibt ein biologisch abbaubares Material der eingangs genannten Gattung. Es wird eine Harzzusammensetzung beschrieben, umfassend einen aliphatischen Polyester wie beispielsweise ein Polylaktid sowie ein oder mehrere Düngemittel ausgewählt aus der Gruppe bestehend aus Kaliumclorid, Calciumsuperphosphat, Calciumsilikat, sowie Phosphate sowie Ammoniumphosphat etc. Als Bindemittel dient ein Bindemittelharz, welches bioabbaubar ist. Dieses bekannte biologisch abbaubare Material wird jedoch im Erdreich verlegt, wobei es dem Zweck dient, das Pflanzenwachstum zu stimulieren.

Das japanische Patent Abstract 2003183483 A beschreibt in ähnlicher Weise einen bioabbaubaren Düngemittelsack, der hergestellt wird durch Wärmeversiegelung aus einem bioabbaubarem Film, wobei der Film Polymilchsäure enthält, einen bioabbaubaren aliphatisch-aromatischen Copolyester, einen Weichmacher und organische Füllstoffe. Der bioabbaubare Düngemittelsack wird durch Wärmeversiegelung aus dem bioabbaubaren Film bei vergleichsweise hohen Temperaturen zwischen 260 und 280°C hergestellt. Das bioabbaubare Polymere ist daher so aufgebaut, dass eine hohe Wärmebeständigkeit für diesen Versiegelungsvorgang gegeben ist. Über die Abbaubarkeit des Materials wird keine Aussage getroffen. Es ist davon auszugehen, dass auch hier die Düngemitteltasche im Erdreich verlegt wird.

In dem japanischen Patent Abstract 11113385 A wird ebenfalls eine Harzzusammensetzung beschrieben, die einen aliphatischen Polyester und ein Düngemittel enthält, wobei unter anderem als Düngemittel-Komponente Stickstoff, Phosphorsäure und Kalium erwähnt werden. Um die Harzmasse zu binden, wird Ton und ein Bindemittel verwendet sowie gegebenenfalls ein Klebstoff. Es wird keine Aussage über den Zeitraum und die Bedingungen für den Bioabbau gesprochen. Auch hier ist vorgesehen, dass die Harzzusammensetzung im Erdreich aufgenommen und dort abgebaut wird.

Hier setzt die vorliegende Erfindung ein. Aufgabe der Erfindung ist es, ein biologisch abbaubares Material zu schaffen, welches beispielsweise zur Herstellung von Folien oder dergleichen für die vorgenannten Anwendungszwecke geeignet ist, welches sich in absehbarer Zeit an der Oberfläche unter dem Einfluss der Witterung zersetzt. Die Lösung dieser Aufgabe liefert ein biologisch abbaubares Material mit den Merkmalen des Hauptanspruchs. Bei der Herstellung von beispielsweise Folien oder anderen Gegenständen aus dem erfindungsgemäßen Material ist es also zur Zersetzung nicht mehr notwendig, das Material unterzupflügen oder anderweitig mit dem Erdreich in Kontakt zu bringen. Das Material wird vielmehr selbsttätig unter dem Einfluss der Witterung biologisch abgebaut. Dabei kann man auf die Standzeit Einfluss nehmen, so dass sich beispielsweise eine für landwirtschaftliche Zwecke verwendete Folie in einem solchen Zeitraum zersetzt, dass die Zersetzung vor Beginn des nächsten Vegetationszyklus vollständig ist. Es erübrigt sich damit, die Folie von der entsprechenden landwirtschaftlichen Fläche zu entfernen oder unterzupflügen.

Die erfindungsgemäße Lösung schlägt vor, in das Trägerpolymer wenigstens ein wasserlösliches Salz einzuarbeiten. Dieses Salz führt zum einen die Zersetzung des biologisch abbaubaren Materials herbei. Außerdem kann man wasserlösliche Salze verwenden, die man derart auswählt, dass sich weitere nützliche Effekte insbesondere bei der Anwendung in der Landwirtschaft ergeben. Die Zersetzung wird dadurch eingeleitet, dass Salz durch Kondenswasserbildung (Feuchte aus dem Boden oder auch durch künstliche Bewässerung im Boden oder direkt unter der Folie) aus der zur landwirtschaftlichen Fläche gelegenen Folienseite herausgelöst wird. Dieses wasserlösliche Salz steht dann der Pflanze und den Mikroorganismen in den Pflanzenwurzelbereichen unter der Folie zur Verfügung. Regen oder künstliche Bewässerung lösen ebenfalls das oder die Salze aus den Folien und zwar von der Oberseite her, so dass die ausgelösten Salze in die landwirtschaftliche Fläche eingebracht werden. Dabei ergeben sich verschiedene Effekte:
1. Das herausgelöste Salz hinterlässt eine mikroporöse Folie mit einer großen Oberfläche. Dadurch nimmt die Gasdurchlässigkeit zu und verhindert den Wärmestau unter der Folie.
2. Die Feuchtedurchlässigkeit der Folie steigt, so dass der natürliche Regen die Pflanze besser erreichen kann.
3. Die Reißfestigkeit der Folie sinkt, so dass Nutz-Pflanzen die Folie leichter durchbrechen können.
4. Die große Oberfläche, insbesondere die innere Oberfläche der Folie ermöglicht dann Mikroorganismen einen besseren Abbau der Folie.
5. Die herausgelösten Salze erhöhen das Wachstum der Mikroorganismen in, auf und unter der Folie, wodurch der biologische Abbau der Folie gefördert wird.
6. Das herausgelöste Salz erhöht das Wachstum der Mikroorganismen im Erdboden, besonders im PflanzenWurzelbereich, wodurch der Abbau der Folie im Erdboden und Wechselwirkungen der Stoffwechselprozesse zwischen Mikroorganismen und Pflanzenwurzel gefördert werden.
7. Das herausgelöste Salz dient der Pflanze als zusätzlicher Nährstoff, der das Pflanzenwachstum nochmals beschleunigt.
8. Über die der Folie zugegebene Menge an wasserlöslichem Salz oder wasserlöslichen Salzen kann die Standzeit der Folie geregelt werden.
9. Das Unterpflügen der Folie zur Kompostierung erübrigt sich.

Aufgrund der obigen Ausführungen kann man beispielsweise mittels einer aus dem erfindungsgemäßen biologisch abbaubaren Material hergestellten Folie, die zur Abdeckung einer landwirtschaftlichen Nutzfläche verwendet wird, einen folgenden Ablauf erzielen. In den ersten Wochen ist die Reißfestigkeit der Folie noch so hoch, dass sie für die Pflanzen undurchdringbar ist. Dadurch erreicht man, dass Unkraut unter der Folie eingeht. Nach einem bestimmten Zeitraum, beispielsweise einer bestimmten Anzahl von Wochen beginnt der Abbau der Folie durch die geschilderten Effekte. Dadurch kann die Nutzpflanze nun die Folie durchdringen, da deren Reißfestigkeit sinkt. Außerdem wird die Nutzpflanze mit dem entsprechenden Salz versorgt, welches der Pflanze als Nährstoff dient. Für unterschiedliche Pflanzen können unterschiedliche Mengen und verschiedenartige Salze benötigt werden, die je nach Anwendungszweck (zum Beispiel Aufzucht von Salat, Gurken oder anderen Gemüsesorten etc.) der Folie entsprechend zugefügt werden beziehungsweise dem Trägerwerkstoff, aus dem die Folie hergestellt wird.

Gemäß der vorliegenden Erfindung enthält das biologisch abbaubare Material in dem als Trägerwerkstoff dienenden biologisch abbaubaren Polymeren mindestens ein wasserlösliches Salz dispergiert oder gelöst, welches als Pflanzennährstoff dient, und/oder das Pflanzenwachstum fördert. Der Trägerwerkstoff kann dabei gegebenenfalls zwei verschiedene oder auch mehrere verschiedene wasserlösliche Salze enthalten, so dass man durch Kombination beispielsweise auf die Bedürfnisse bestimmter Pflanzengattungen individuell abgestimmte Nährstoffkomponenten zur Verfügung stellen kann. Diese Komponenten können in unterschiedlichen Mengen in das Trägerpolymere eingearbeitet sein und aufgrund dieser Menge sowie abhängig von den jeweiligen klimatischen und sonstigen Wachstumsbedingungen und der Wasserlöslichkeit des Salzes der Pflanze zu einem gewählten Zeitpunkt und in gewünschter Menge zugeführt werden. Als wasserlösliche Salze, die im Rahmen der vorliegenden Erfindung in Betracht kommen, sind beispielsweise zu nennen solche Salze, die ein Kation, ausgewählt aus der Gruppe umfassend NA⁺, K⁺, Mg²⁺, Ca²⁺, NH₄⁺ enthalten. In Betracht kommen vorzugsweise wasserlösliche Salze mit einem Anion ausgewählt aus der Gruppe umfassend Sulfat, Sulfit, Nitrat, Nitrit, Phosphat, Chlorid, Phosphit, Carbonat, Borate, Aluminate oder andere wasserlösliche Bor- oder Aluminiumsalze. Diese Substanzen seien nur beispielhaft genannt und die Aufzählung ist nicht erschöpfend.

Die Art der Abgabe dieser Salze aus dem biologisch abbaubaren Material hängt auch von der Auswahl des biologisch abbaubaren Polymeren ab, welches als Trägerwerkstoff dient. Je nachdem, welche chemische Konstitution dieses Trägerpolymere aufweist und natürlich auch abhängig von der Art und Menge der darin gelösten oder dispergierten Salze ergibt sich ein Zeitpunkt, an dem die Salze beginnen, aus dem Trägerpolymeren ausgewaschen zu werden. Dadurch wird das Trägerpolymere mikroporös, wodurch der Abbau des Materials und auch der Vorgang des Auswaschens der Salze gegebenenfalls beschleunigt wird. Als biologisch abbaubare Trägerwerkstoffe kommen beispielsweise synthetische Polymere in Betracht, ausgewählt aus der Gruppe, umfassend Ecoflex®, Biomax® oder BAK. Ebenso kommen in Betracht als Trägerwerkstoff Polymere, ausgewählt aus den Thermoplasten auf Basis von Polysacchariden, Thermoplasten auf Basis von Polyhydroxybuttersäure, Thermoplasten auf Basis von Polyhydroxyalkalinsäure, Casein-Kunststoffe, Polyhydroxybutyrate, Celluloseacetate, Zellglas, Polylactide, Stärke, Stärke-Blends, Holzmehl-/Stärkekombinationen, Polycaprolacton, Polybutylensuccinat oder Copolyester. Die in der Aufzählung genannten Trägerwerkstoffe seien hier nur beispielhaft genannt. Die Aufzählung ist keinesfalls erschöpfend.

Besonders bevorzugt ist im Rahmen der vorliegenden Erfindung, wenn das biologisch abbaubare Material mindestens ein wasserlösliches, umweltverträgliches Kaliumsalz enthält. Dabei zeigen wasserfreie Salze, beziehungsweise kristallwasserfreie Salze Vorteile gegenüber kristallwasserhaltigen Salzen, da sie sich besser verarbeiten lassen. Bei der Verarbeitung von Kunststoffgranulat zu beispielsweise Folien, Spritzgussartikeln oder dergleichen, werden in der Regel Temperaturen von im Bereich zwischen etwa 100° C und 200° C angewandt. Beim Schmelzen des Trägerpolymeren kann daher Kristallwasser in Form von Dampf aus den Kristallen austreten und den Verarbeitungsprozess stören.

Aus dem erfindungsgemäßen biologisch abbaubaren Material können Compounds oder Masterbatche hergestellt werden unter Anwendung der üblichen in der Kunststofftechnik bekannten Methoden. Neben mindestens einem biologisch abbaubaren Trägerpolymeren können diese Compounds oder Masterbatche weitere Polymere umfassen, beispielsweise aus der Gruppe umfassend Polyethylen, Polyester oder Polypropylen. Vorzugsweise enthalten Compounds oder Masterbatche mindestens ein wasserlösliches Salz gemäß der Erfindung in einer Dosierung von etwa 0,1 % bis etwa 85 % in mindestens einem biologisch abbaubaren Trägerwerkstoff.

Die genannten Compounds oder Masterbatche können dann weiterverarbeitet werden zu Produkten oder Halbzeugen, beispielsweise zu Folien, Bändchen, Geweben, Platten, Tiefziehteilen, Profilen, Rohren, Filamenten, Garn, Textilien, Geweben, Vliesen oder Spritzgussartikeln. Weiterhin ist es möglich, ein biologisch abbaubares Material gemäß der vorliegenden Erfindung einem anderen biologisch abbaubaren Werkstoff zuzumischen, insbesondere als Standzeitverkürzer. Gegenstand der vorliegenden Erfindung sind auch Compounds oder Masterbatche mit den in den Ansprüchen 12 oder 13 genannten Merkmalen. Weiterhin sind die aus diesen hergestellten Produkte oder Halbzeuge Gegenstand der Erfindung, insbesondere Produkte oder Halbzeuge mit den Merkmalen des Anspruchs 15. Gegenstand der Erfindung ist weiterhin ein Produkt oder Halbzeug aus einem biologisch abbaubaren Material, welches mindestens ein wasserlösliches Salz in einem biologisch abbaubaren Trägerpolymeren in einer solchen Menge enthält, dass das Produkt oder Halbzeug im Freien an der Umgebungsluft innerhalb einer vorgegebenen Standzeit abgebaut wird, ohne dass es untergepflügt oder mit Erde bedeckt wird.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand eines Ausführungsbeispiels unter Bezugnahme auf die beiliegende Zeichnung näher erläutert. Dabei zeigt
- Fig. 1: eine schematisch vereinfachte Schnittansicht durch das Erdreich bei teilweiser Abdeckung mit einer biologisch abbaubaren Folie gemäß der Erfindung;
- Fig. 2: eine vergrößerte Detailansicht eines Ausschnitts II von Fig. 1.

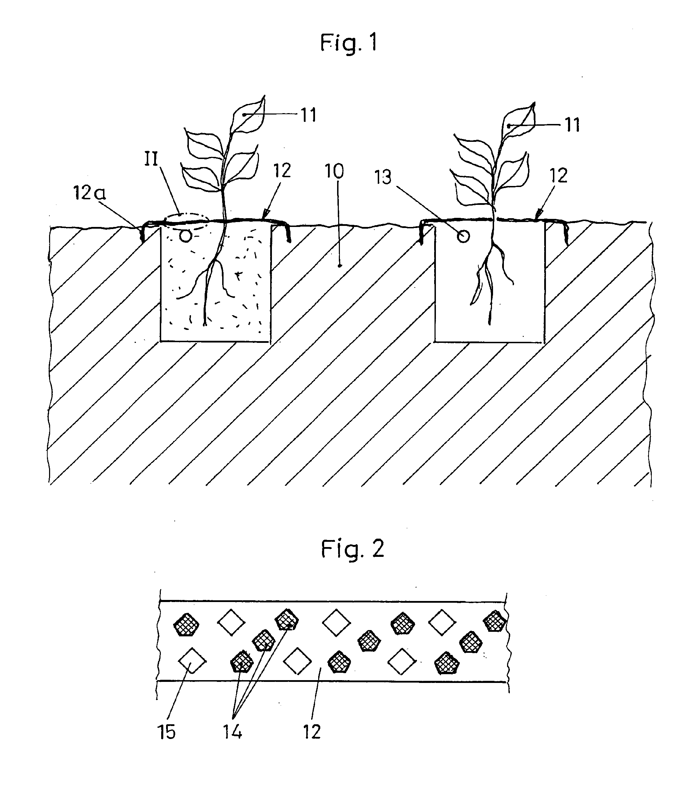

Zunächst wird auf Fig. 1 Bezug genommen. Die Darstellung zeigt schematisch stark vereinfacht einen Vertikalschnitt durch das Erdreich 10, in welches Nutzpflanzen 11 eingesetzt sind. Mindestens im Bereich um die Nutzpflanzen 11 herum ist das Erdreich 10 mittels einer biologisch abbaubaren Folie 12 (Mulchfolie) abgedeckt. Es handelt sich beispielsweise um eine schwarze Folie aus dem biologisch abbaubaren Trägerpolymeren Ecoflex®, welches Kaliumsulfat enthält. Die Nutzpflanzen 11 sind in Reihen gesetzt, die untereinander einen geeigneten Abstand von beispielsweise 150 cm aufweisen. Der von der Folie 12 abgedeckte Bereich der gesetzten Pflanze 11 hat beispielsweise eine Breite von jeweils etwa 50 bis 60 cm, wobei die Folie 12 vorzugsweise etwas breiter ist als die Ackerfurche, in die die Pflanze 11 gesetzt wurde. Die Folie kann, wie aus Fig. 1 erkennbar ist, in den Randbereichen 12a jeweils ein Stück in das Erdreich 10 hineinreichen, um die Folie auf diese Art besser am Erdboden festzulegen und gegen Windangriff zu schützen. Über einen hier nur schematisch angedeuteten Schlauch 13 kann man beispielsweise im Pflanzenwurzelbereich unterhalb der Folie 12 bewässern (beispielsweise sogenannte Tropfenbewässerung Fertigation). Die erfindungsgemäße Folie 12 ist so konzipiert, dass sie sich innerhalb einer Standzeit von beispielsweise zwei bis sechs Monaten vollständig zersetzt. Dabei erfolgt der Abbau allein durch die Witterung, da die Folie 12, wie man aus Fig. 1 erkennen kann, an der Bodenoberfläche liegt. Es ist nicht notwendig, die Folie unterzupflügen oder nach der Vegetationsperiode zu entfernen.

Fig. 2 zeigt einen schematisch vereinfachten stark vergrößerten Detailausschnitt II von Fig. 1. Dort ist die Folie 12 im Schnitt dargestellt. Wie man aus der Zeichnung erkennt, enthält diese wasserlösliche Salze 14. Durch Feuchtigkeit, das heißt Kondenswasserbildung, künstliche Bewässerung, beziehungsweise natürlichen Niederschlag werden diese Salze 14 aus der Folie 12 herausgelöst, so dass sich Fehlstellen 15 ergeben. Die Folie 12 wird damit mikroporös, wodurch ein rascherer Abbau erfolgen kann.

Nachfolgend wird anhand von Beispielen die vorliegende Erfindung näher erläutert.

### Beispiel 1

Aus dem biologisch abbaubaren Polymeren Ecoflex® (Hersteller BASF), welches als Trägerpolymeres dient, wird unter Zugabe von 60 Gew.-% kristallwasserfreiem Kaliumsulfat ein Masterbatch hergestellt. Dieses Masterbatch in Granulatform dient als Ausgangsmaterial zur Herstellung einer transparenten Blasfolie mit einer Materialstärke von 15 µm, beziehungsweise 12 µm.

Die auf diese Weise hergestellte transparente bioabbaubare Folie dient als Mulchfolie für Feldversuche, bei denen Salate, Kohl und Kräuter großflächig angebaut werden. Die etwas stärkere Folie mit 15 µm wird als Frühfolie eingesetzt. Die Folie mit der geringeren Materialstärke von 12 µm wird als Sommerfolie ab der 25. Kalenderwoche eingesetzt. Die Folien dienen zur Unterdrückung des Unkrautwachstums in der Umgebung der vorgenannten Nutzpflanzen. Durch das in der Folie enthaltene Kaliumsulfat erfolgt bei der Zersetzung der Folie eine Düngung der Nutzpflanzen. Sowohl die Frühfolie als auch die Sommerfolie hatten eine Standzeit von 60 Tagen. Nach der Vegetationsperiode zersetzen sich die Folien vollständig in Kohlendioxid, Wasser und Biomasse. Die Folien lieferten durch ihren Nährstoffanteil einen wertvollen Beitrag zum Nährstoffhaushalt des Bodens. Das Unkrautwachstum wurde durch die anfängliche Festigkeit der Biofolie unterdrückt.

### Beispiel 2

In ähnlicher Weise wie in Beispiel 1 wurden aus dem biologisch abbaubaren Polymeren Ecoflex® transparente und weiße Wachstumsfolien hergestellt durch Blasextrusion in den Materialstärken 15 µm, beziehungsweise 18 µm. Den biologisch abbaubaren Trägerpolymeren wurde wasserlösliches Kaliumsulfat und/oder Magnesiumsulfat in einer Menge von 15 Gew.-% zugegeben. Die Folien wurden als Flachfolien in Feldversuchen bei der Aufzucht von Salaten, Kohl und Kräutern eingesetzt und zeigten einen wachstumsfördernden Effekt. Die Folie mit der Materialstärke von 18 µm wurde als Frühfolie eingesetzt und wies eine Standzeit von ca. 90 Tagen auf. Die Folie mit der Materialstärke von 15 µm diente als Sommerfolie und wurde ab der 25. Kalenderwoche eingesetzt und wies eine Standzeit von ca. 70 Tagen auf. Es zeigte sich, dass die Photosynthese bei Chlorophyll bildenden Kulturen durch Einsatz der Folien verbessert wird. Die Folien liefern außerdem einen wertvollen Beitrag zum Nährstoffhaushalt der Pflanzen. Die Bildung von Unkraut konnte erfolgreich unterdrückt werden.

### Beispiel 3

In ähnlicher Weise wie in den zuvor beschriebenen Beispielen wurden durch Blasextrusion ausgehend von einem Granulat eines biologisch abbaubaren Trägerpolymeren und diesem zugesetzten wasserlöslichen Salzen, zum Beispiel Kaliumsulfat biologisch abbaubare Wachstumsfolien für den Einsatz in der Landwirtschaft hergestellt. Die Folien wurden in schwarz und in weiß hergestellt, jeweils mit Materialstärken von 18 µm. Diese Wachstumsfolien NSF KS30 wurden eingesetzt im Anbau von Gurken, Zucchini und Tomaten. Die Wachstumsfolien zeigten gute mechanische Eigenschaften gegen den Unkrautdruck. Die schwarzen Folien wurden in der Sätechnik eingesetzt und die weißen Folien in der Pflanzentechnik. Die Standzeit der Folien betrug ca. 84 Tage. Nach der Vegetationsperiode zersetzen sich die Folien vollständig in Kohlendioxid, Wasser und Biomasse. Gegebenenfalls in Ausnahmefällen noch vorhandene Restmaterialbestände zum Beispiel im Befestigungsbereich (Materialanhäufung durch Einpflügen der Folie) können unbedenklich untergepflügt werden.

## Patentansprüche

1. Biologisch abbaubares Material umfassend mindestens ein biologisch abbaubares Polymeres als Trägerwerkstoff, wobei in dem Trägerwerkstoff mindestens ein wasserlösliches Salz gelöst oder dispergiert ist, welches als Pflanzennährstoff dient und/oder das Pflanzenwachstum fördert,
**dadurch gekennzeichnet, dass** das biologisch abbaubare Material wenigstens ein wasserlösliches Salz in einem biologisch abbaubaren Trägerpolymeren in einer solchen Menge enthält, dass das Material im Freien an der Umgebungsluft unter Witterungseinfluss innerhalb einer vorgegebenen Standzeit abgebaut wird.

2. Biologisch abbaubares Material nach Anspruch 1, **dadurch gekennzeichnet, dass** der Trägerwerkstoff mindestens zwei verschiedene, vorzugsweise mehrere verschiedene wasserlösliche Salze enthält.

3. Biologisch abbaubares Material nach einem der Ansprüche 1 oder 2, **dadurch gekennzeichnet, dass** dieses mindestens ein wasserlösliches Salz mit mindestens einem Kation ausgewählt aus der Gruppe umfassend NA⁺, K⁺, Mg²⁺, Ca²⁺, NH₄⁺ enthält.

4. Biologisch abbaubares Material nach einem der Ansprüche 1 bis 3, **dadurch gekennzeichnet, dass** dieses mindestens ein wasserlösliches Salz mit einem Anion ausgewählt aus der Gruppe umfassend Sulfat, Sulfit, Nitrat, Nitrit, Phosphat, Chlorid, Phosphit, Carbonat, Borate, Aluminate oder ein anderes wasserlösliches Bor- oder Aluminiumsalz enthält.

5. Biologisch abbaubares Material nach einem der Ansprüche 1 bis 4, **dadurch gekennzeichnet, dass** dieses als biologisch abbaubaren Trägerwerkstoff wenigstens ein synthetisches Polymer ausgewählt aus der Gruppe umfassend Ecoflex®, Biomax®, oder BAK aufweist.

6. Biologisch abbaubares Material nach einem der Ansprüche 1 bis 5, **dadurch gekennzeichnet, dass** dieses als Trägerwerkstoff wenigstens ein Polymeres, ausgewählt aus den Thermoplasten auf Basis von Polysacchariden, Thermoplasten auf Basis von Polyhydroxybuttersäure, Thermoplasten auf Basis von Polyhydroxyalkalinsäure, Casein-Kunststoffe, Polyhydroxybutyrate, Celluloseacetate, Zellglas, Polylactide, Stärke, Stärke-Blends, Holzmehl-/Stärkekombinationen, Polycaprolacton, Polybutylensuccinat oder Copolyester aufweist.

7. Biologisch abbaubares Material nach einem der Ansprüche 1 bis 6, **dadurch gekennzeichnet, dass** dieses mindestens ein wasserlösliches umweltverträgliches Kaliumsalz enthält.

8. Biologisch abbaubares Material nach einem der Ansprüche 1 bis 7, **dadurch gekennzeichnet, dass** dieses mindestens ein wasserlösliches kristallwasserfreies Salz enthält.

9. Biologisch abbaubares Material nach einem der Ansprüche 1 bis 8, **dadurch gekennzeichnet, dass** dieses vorzugsweise kristallwasserfreies Kaliumsulfat enthält.

10. Biologisch abbaubares Material gemäß einem der Ansprüche 1 bis 9, **dadurch gekennzeichnet, dass** dieses als Compound oder Masterbatch vorliegt.

11. Compound oder Masterbatch umfassend mindestens ein biologisch abbaubares Material gemäß einem der Ansprüche 1 bis 10 sowie mindestens ein weiteres Polymeres, vorzugsweise ausgewählt aus der Gruppe umfassend Polyethylen, Polyester und Polypropylen.

12. Compound oder Masterbatch nach Anspruch 11, enthaltend mindestens ein wasserlösliches Salz in einer Dosierung von 0,1 bis 85 % in mindestens einem biologisch abbaubaren Trägerpolymeren sowie mindestens ein weiteres Polymeres, vorzugsweise ausgewählt aus der Gruppe umfassend Polyethylen, Polyester und Polypropylen.

13. Produkt oder Halbzeug, **dadurch gekennzeichnet, dass** dieses aus einem biologisch abbaubaren Material gemäß einem der Ansprüche 1 bis 9 oder einem Compound oder Masterbatch gemäß einem der Ansprüche 10 bis 12 hergestellt wurde.

14. Aus wenigstens einem biologisch abbaubaren Material gemäß einem der Ansprüche 1 bis 9 oder einem Compound oder Masterbatch gemäß einem der Ansprüche 10 bis 12 hergestelltes Produkt oder Halbzeug, **dadurch gekennzeichnet, dass** dieses in Form einer Folie, eines Bandes, Gewebes, einer Platte, eines Tiefziehteils, eines Profils, eines Rohrs, eines Filaments, eines Garns, eines Textils, eines Gewebes, eines Vlieses oder eines Spritzgussartikels vorliegt.
